# EUROPEAN PATENT SPECIFICATION

(11) **EP 1 906 112 B1**
(45) Date of publication and mention of the grant of the patent: **30.05.2018**
(21) Application number: 07018439.5
(22) Date of filing: 20.09.2007
(51) Int. Cl.: F25B 39/02, F28D 1/047, F28F 21/08

(54) **Aluminium-coil and copper fitting evaporator construction**
Aluminiumspule und Verdampferkonstruktion mit einem Verbindungsstück aus Kupfer
Bobine d'aluminium et construction d'évaporateur à fixation de cuivre

(30) Priority: 20.09.2006 IT MI20061786; 07.05.2007 IT MI20070914
(43) Date of publication of application: 02.04.2008
(73) Proprietor: O.L.S. Officina Lavorazioni Speciali S.r.l., 27038 Robbio - Pavia (IT)
(72) Inventor: Ferrara, Antonella, 27038 Robbio (Pavia) (IT)
(74) Representative: Rastelli, Franco

(56) References cited:
- DE-A1- 4 436 777
- DE-B- 1 242 646
- GB-A- 2 418 478
- US-A- 2 760 346
- US-A- 2 979 924
- US-A- 4 147 037

## Description

### BACKGROUND OF THE INVENTION

The present invention relates to an evaporator construction and a method for making an evaporator construction.

As is known, for making refrigerators, are at present conventionally used coil evaporators, including an aluminium coil element ending with a copper fitting or terminal, which is welded to the compressor of the refrigerator apparatus.

The connection of the copper fitting or terminal and aluminium coil is very difficult, since it is performed under mechanical deformations.

Accordingly, losses through the coil circuit may easily occur.

Another problem is that it is further necessary to connect to the coil a capillary tube, which, being made of a different material from that forming the coil, can cause leakage or eddy currents to be formed, just because the connection of different materials. The document US 4 147 037 discloses an evaporator construction according to the preamble of independent claim 1.

### SUMMARY OF THE INVENTION

Accordingly, the aim of the present invention is to overcome the above mentioned problem, by providing an aluminium-coil and copper fitting evaporator construction, allowing to perform a stable connection between its component elements, without generating regions susceptible to be affected by possible fluid losses.

Within the scope of the above mentioned aim, a main object of the invention is to provide such an evaporator construction, including a plurality of component elements which can be quickly and easily coupled without generating eddy currents which would be very dangerous for a long duration life of the evaporator.

Yet another object of the present invention is to provide such an evaporator construction allowing to easily perform, in addition to a safe connection, also a mechanical protection for the capillary tube, to be intimately coupled, as required, to the evaporator coil.

A further object of the present invention is to provide such an evaporator construction which, owing to its specifically designed constructional features, is very reliable and safe in operation.

Yet another object of the present invention is to provide such an aluminium-coil and copper fitting evaporator construction which can be easily made starting from easily commercially available elements and materials and which, moreover, is very competitive from a mere economic standpoint.

According to one aspect of the present invention, the above mentioned aim and objects, as well as yet other objects, which will become more apparent hereinafter, are achieved by an aluminium-coil and copper fitting evaporator construction, comprising an aluminium coil to which a copper fitting or terminal is coupled, and being characterized in that said evaporator construction further comprises, at a coupling region between said aluminium-coil and copper fitting or terminal, a welded-brazed connection.

### BRIEF DESCRIPTION OF THE DRAWINGS

Further characteristics and advantages of the present invention will become more apparent hereinafter from the following detailed disclosure of some preferred, though not exclusive, embodiments of an aluminium-coil and copper fitting evaporator construction, which is illustrated, by way of an indicative, but not limitative, example in the accompanying drawings, where:
Figure 1 is a schematic view showing an evaporator construction according to the present invention, with a capillary tube therefor coupled to its copper fitting or terminal;
Figure 2 is a further schematic view showing the evaporator construction with the capillary tube coupled to the aluminium coil thereof;
Figure 3 is a further schematic view of an evaporator, including the capillary tube arranged inside the coil;

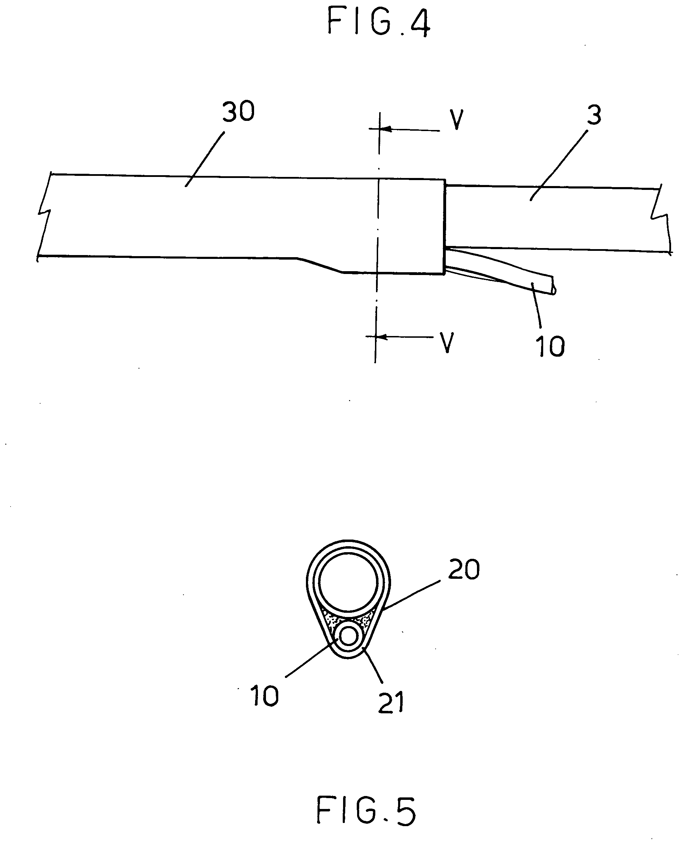

Figure 4 is a further schematic view showing, on an enlarged scale, a detail of the connection between the evaporator and terminal tube; and
Figure 5 is a cross-sectional view substantially taken along the line V-V of figure 4.

### DESCRIPTION OF THE PREFERRED EMBODIMENTS

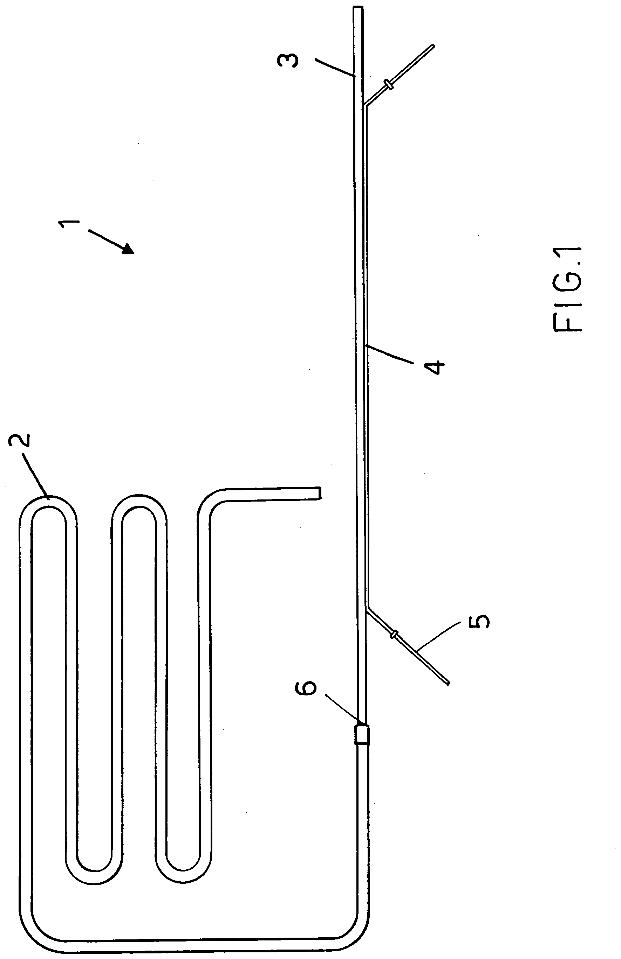

With reference to the number references of the above mentioned figures and, more specifically, to figure 1, is herein shown an evaporator construction, generally indicated by the reference number 1, comprises an aluminium coil 2 to which is coupled a copper fitting or terminal 3.

To said copper terminal or fitting 3, is further coupled, for example by a tin weldment, or through a shrinkable sheath or jacket 4, a capillary tube 5 which is typically also made of a copper material.

At the connection region between the aluminum coil 2 and copper terminal 3, a welded-brazed connection 6 is moreover provided.

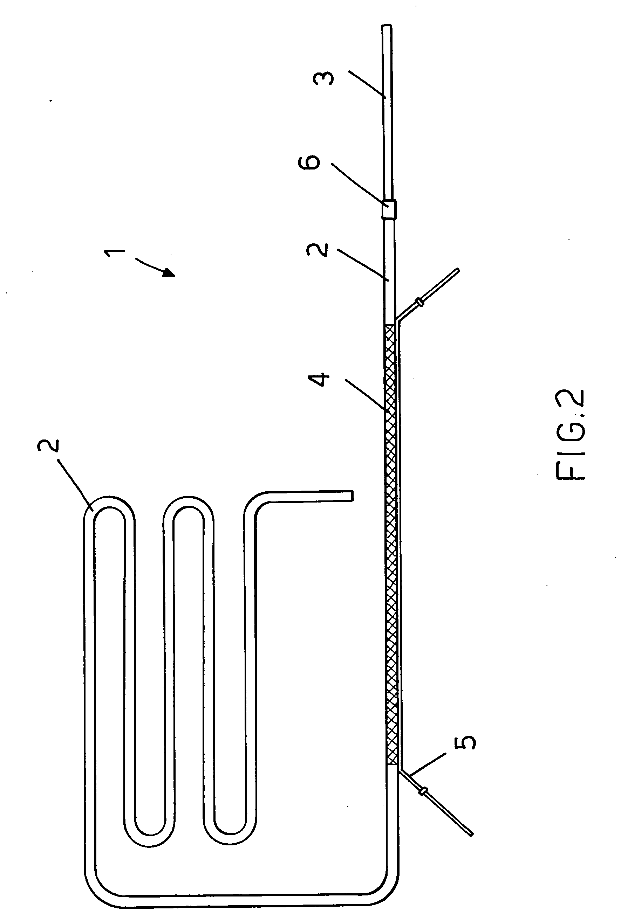

With reference to figure 2, the evaporator 1 comprises a capillary tube 5 which is coupled, through a thermoshrinking sheath or jacket 4, directed to the end portion of the aluminium coil 2.

The connection of the copper terminal or fitting 3 is, also in this case, made by a welded-brazed connection, generally indicated by the reference number 6.

The welding-brazing process provides to preliminarily perform a cleaning and degreasing step at the connection or joining points, and to form a tapering or enlarged portion at the end part of the aluminium coil 2, thereby providing an inner diameter slightly larger than the outer diameter of the copper heat exchanger to which the subject construction will be connected.

Such an operation, which is conventionally called "clambering" or tapering, is carrier out before the engaging of the copper fitting 3 and before the welding proper.

More specifically, the copper fitting or terminal 3 is preferably introduced for a length of about 1 cm into the aluminium coil.

The joining is performed by a manual torch welding-brazing operation, by preferably using, as a filling material, zinc-aluminium alloy rod elements, being formed of approximately 98% zinc and 2% aluminium, and further including a non-corrosive deoxidating paste therein.

Said non-corrosive deoxidating paste is preferably constituted by a deoxidating paste which is commercially available with the tradename of "nocolok", and being made by the Solvay Company.

Thus, at the end of the welding operation, a perfectly tight weldment will be obtained.

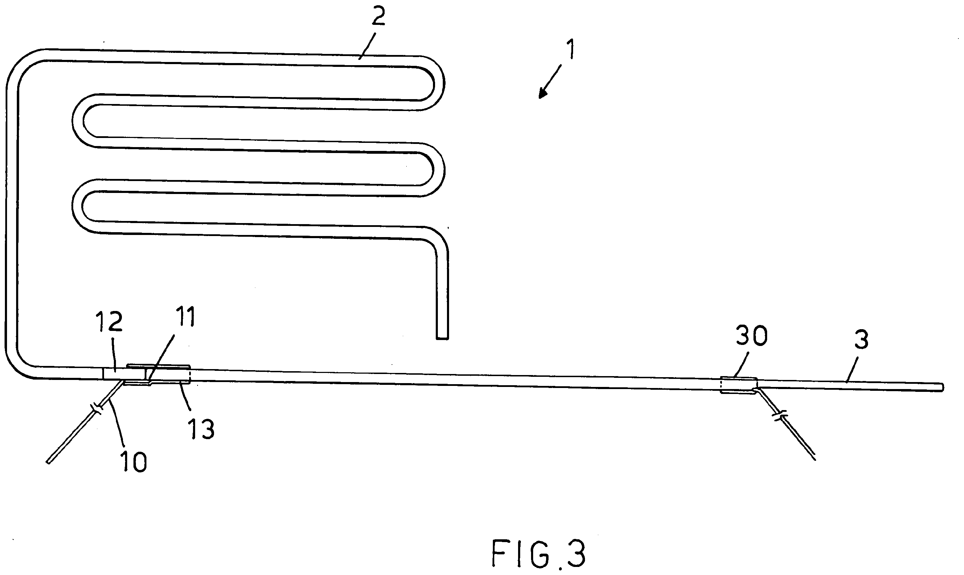

As shown in figure 3, a capillary copper tube, generally indicated by the reference number 10, is arranged coaxially at the last piece of the coil and projects therefrom substantially at the connection region coupling it to the copper fitting.

In particular, said capillary tube provides a narrowed region allowing the gas to pass from a gaseous status to a liquid status.

To perform the connection, a small hole is performed through the aluminium tube and, through said hole, generally indicated by the reference number 11, is engaged said capillary tube 10 at a region where an inner sheath or jacket 12 is arranged, said inner sheath or jacket being provided for preventing the capillary tube and aluminium coil from contacting.

At the inlet region of the capillary tube is then performed a welding-brazing operation, thereby tightly connecting the aluminium coil.

Moreover, at the inlet region of said capillary tube, a further outer sheath or jacket 13 is provided, which encompasses the first sheath or inner sheath or jacket 12 and coats the outside of the capillary tube and aluminium coil.

The above disclosed double sheath or jacket is provided for protecting the welding-brazing operation, carried out at a point thereat the evaporator is arranged at a region where moisture may be present, as the refrigerator apparatus operates.

As shown, the capillary tube 10 projects from the aluminium tube at the end portion of the coil where a double-bell tapering portion 20 is provided, which defines a region for coupling the copper fitting 3 and an enlarged region 21, therethrough the capillary tube 10 is caused to pass.

At this region a welding-brazing operation, now indicated by the reference number 30, is performed for coupling the aluminium tube, the copper tube and copper capillary tube.

The thus disclosed assembly is completed by an end sheath or jacket, generally indicated by the reference number 30, which is advantageously made of a thermally shrinkable material.

From the above disclosure it should be apparent that the invention fully achieves the intended aim and objects.

In fact, the welding-brazing operation, which is manually operated under a flame, provides a very efficient connection, having very satisfactory tightness properties.

In this respect it should be also pointed out that the connection of the copper capillary tube, which is made without regions susceptible to generate eddy currents, is a particularly functional one, also due to the fact that the capillary copper tube is coaxially arranged inside the aluminium tube, thereby providing an improved thermal exchange.

The invention, as disclosed, is susceptible to several modifications and variations, all of which will come within the scope of the invention.

Moreover, all the constructional details can be replaced by other technically equivalent elements.

In practicing the invention, the used materials, provided that they are compatible to the intended use, as well as the contingent size and shapes, can be any, depending on requirements.

## Claims

1. An evaporator construction (1), including an aluminium coil (2) to which a copper fitting (3) is connected, to said copper fitting (3) being further coupled a capillary copper tube (5), **characterized in that** said copper fitting (3) has an end thereof arranged for substantially 1 cm within an end portion of said aluminium coil (2), to define a connection region between said aluminium coil (2) and copper fitting (3), **that** said construction (1) comprises, at said connection region, a welded-brazed connection (6), **that** said welded-brazed connection (6) consists of a material comprising a zinc-aluminium alloy including 98% zinc, 2% aluminium, said material further comprising a non-corrosive deoxidating paste.

2. An evaporator construction (1), according to claim 1, **characterized in that** said capillary copper tube (5) is coupled to said aluminium coil (2) either partially inside or fully outside of said aluminium coil (2).

3. An evaporator construction (1), according to claims 1 and 2, **characterized in that** said capillary copper tube (5) is coupled to said aluminium coil (2) by a tin welded connection.

4. An evaporator construction (1), according to one or more of the preceding claims, **characterized in that** said capillary copper tube (5) is coupled to said aluminium coil (2) through a thermoshrinking sheath (4).

5. An evaporator construction (1), according to one or more of the preceding claims, **characterized in that** said capillary copper tube (5) is coupled to said copper fitting (3).

6. An evaporator construction (1), according to one or more of the preceding claims, **characterized in that** said capillary copper tube (5) is engaged within said aluminium coil (2) and projects therefrom at the connection region connecting the copper fitting (3).

7. An evaporator construction (1), according to one or more of the preceding claims, **characterized in that** said capillary copper tube (5) extends coaxially inside a length of said aluminium coil (2).

8. An evaporator construction (1), according to one or more of the preceding claims, **characterized in that** said evaporator construction (1) comprises a first said welded-brazed connection (6) at a point where said capillary copper tube (5) enters said aluminium coil (2).

9. An evaporator construction (1), according to one or more of the preceding claims, **characterized in that** said evaporator construction (1) comprises an inner sheath (12) arranged at an inlet region of said capillary copper tube, and being arranged between said aluminium coil (2) and capillary copper tube, a further outer sheath (13) for preventing eddy currents from being generated, being herein moreover provided.

10. An evaporator construction (1), according to one or more of the preceding claims, **characterized in that** said evaporator construction (1) further comprises, at the connection region to said copper fitting (3), a double-bell tapering portion (20) defining a connection region of said copper fitting (3) and an enlarged region (21) of said capillary copper (10) tube, said double-bell tapering portion (20) being made by said welded-brazed connection (6).

11. An evaporator construction (1), according to one or more of the preceding claims, **characterized in that** said evaporator construction (1) further comprises an end sheath or jacket (30) for protecting the connection.

12. An evaporator construction (1), according to one or more of the preceding claims, **characterized in that** said end sheath (30) is of a thermoshrinking type.

13. A method for making an evaporator construction according to claims 1 to 12, **characterized in that** said method comprises the steps of:
cleaning and degreasing a copper tube fitting (3) and aluminium coil (2) at their joining points;
carrying out a tapering or cambering of an end portion of the aluminium coil (2) to provide an inner diameter slightly greater than an outer diameter of the copper tube fitting (3);
introducing said copper tube fitting (3) for about 1 cm inside said aluminium coil (2);
and
performing a torch manual welding-brazing step, said method being wherein said welding-brazing step is carried out by using, as a filling material, a zinc-aluminium alloy rod, including 98% zinc, 2% aluminium and a non-corrosive deoxidating paste.

14. A method, according to claim 13, **characterized in that** said method comprises the steps of providing a hole (11) through said aluminium coil (2), introducing a capillary copper tube (10) into said hole, carrying out a first welding-brazing operation at the inlet region of said capillary copper tube (10), carrying out a double-bell tapering at an end portion of said aluminium coil (2) for coupling said capillary copper tube (10), copper fitting (3) and aluminium coil (2) by a single welding-brazing step.

15. A method, according to claim 13, **characterized in that** said method further comprises a step of applying an inner sheath (12) near the inlet region of said capillary copper tube (10), and an outer coating sheath (13) thereon.

## Patentansprüche

1. Verdampferkonstruktion (1), die eine Aluminiumspule (2) aufweist, mit der ein Verbindungsstück aus Kupfer (3) verbunden ist, wobei mit dem Verbindungsstück aus Kupfer (3) ferner ein Kapillarrohr aus Kupfer (5) gekoppelt ist, **dadurch gekennzeichnet, dass** ein Ende des Verbindungsstücks aus Kupfer (3) für im Wesentlichen 1 cm innerhalb eines Endabschnitts der Aluminiumspule (2) angeordnet ist, um einen Verbindungsbereich zwischen der Aluminiumspule (2) und dem Verbindungsstück aus Kupfer (3) zu definieren, dass die Konstruktion (1) an dem Verbindungsbereich eine schweißgelötete Verbindung (6) umfasst, dass die schweißgelötete Verbindung (6) aus einem Material besteht, das eine Zink-Aluminium-Legierung mit 98 % Zink, 2 % Aluminium umfasst, wobei das Material ferner eine nicht korrodierende desoxidierende Paste umfasst.

2. Verdampferkonstruktion (1) nach Anspruch 1, **dadurch gekennzeichnet, dass** das Kapillarrohr aus Kupfer (5) mit der Aluminiumspule (2) entweder teilweise im Inneren oder vollständig außerhalb der Aluminiumspule (2) gekoppelt ist.

3. Verdampferkonstruktion (1) nach den Ansprüchen 1 und 2, **dadurch gekennzeichnet, dass** das Kapillarrohr aus Kupfer (5) durch eine Zinnschweißverbindung mit der Aluminiumspule (2) gekoppelt ist.

4. Verdampferkonstruktion (1) nach einem oder mehreren der vorhergehenden Ansprüche, **dadurch gekennzeichnet, dass** das Kapillarrohr aus Kupfer (5) durch einen Wärmeschrumpfschlauch (4) mit der Aluminiumspule (2) gekoppelt ist.

5. Verdampferkonstruktion (1) nach einem oder mehreren der vorhergehenden Ansprüche, **dadurch gekennzeichnet, dass** das Kapillarrohr aus Kupfer (5) mit dem Verbindungsstück aus Kupfer (3) gekoppelt ist.

6. Verdampferkonstruktion (1) nach einem oder mehreren der vorhergehenden Ansprüche, **dadurch gekennzeichnet, dass** das Kapillarrohr aus Kupfer (5) in der Aluminiumspule (2) in Eingriff gehalten wird und an dem Verbindungsbereich, der das Verbindungsstück aus Kupfer (3) verbindet, daraus hervorsteht.

7. Verdampferkonstruktion (1) nach einem oder mehreren der vorhergehenden Ansprüche, **dadurch gekennzeichnet, dass** das Kapillarrohr aus Kupfer (5) sich koaxial im Inneren eines Abschnitts der Aluminiumspule (2) erstreckt.

8. Verdampferkonstruktion (1) nach einem oder mehreren der vorhergehenden Ansprüche, **dadurch gekennzeichnet, dass** die Verdampferkonstruktion (1) eine erste schweißgelötete Verbindung (6) an einem Punkt umfasst, wo das Kapillarrohr aus Kupfer (5) in die Aluminiumspule (2) eintritt.

9. Verdampferkonstruktion (1) nach einem oder mehreren der vorhergehenden Ansprüche, **dadurch gekennzeichnet, dass** die Verdampferkonstruktion (1) eine innere Ummantelung (12) umfasst, die an einem Einlassbereich des Kapillarrohrs aus Kupfer angeordnet ist, und darin außerdem, zwischen der Aluminiumspule (2) und dem Kapillarrohr aus Kupfer angeordnet, eine weitere äußere Ummantelung (13) vorgesehen ist, um zu verhindern, dass Wirbelströme erzeugt werden.

10. Verdampferkonstruktion (1) nach einem oder mehreren der vorhergehenden Ansprüche, **dadurch gekennzeichnet, dass** die Verdampferkonstruktion (1) ferner an dem Verbindungsbereich mit dem Verbindungsstück aus Kupfer (3) einen Zweimantelverjüngungsabschnitt (20) umfasst, der einen Verbindungsbereich des Verbindungsstücks aus Kupfer (3) und einen vergrößerten Bereich (21) des Kapillarrohrs aus Kupfer (10) definiert, wobei der Zweimantelverjüngungsabschnitt (20) durch die schweißgelötete Verbindung (6) hergestellt ist.

11. Verdampferkonstruktion (1) nach einem oder mehreren der vorhergehenden Ansprüche, **dadurch gekennzeichnet, dass** die Verdampferkonstruktion (1) ferner eine(n) Endummantelung oder mantel (30) zum Schützen der Verbindung umfasst.

12. Verdampferkonstruktion (1) nach einem oder mehreren der vorhergehenden Ansprüche, **dadurch gekennzeichnet, dass** die Endummantelung (30) vom Wärmeschrumpftyp ist.

13. Verfahren zum Herstellen einer Verdampferkonstruktion nach den Ansprüchen 1 bis 12, **dadurch gekennzeichnet, dass** das Verfahren folgende Schritte umfasst:
Reinigen und Entfetten eines Rohrverbindungsstücks aus Kupfer (3) und einer Aluminiumspule (2) an ihren Verbindungspunkten;
Ausführen eines Verjüngens oder Aufwölbens eines Endabschnitts der Aluminiumspule (2), um einen Innendurchmesser bereitzustellen, der etwas größer ist als ein Außendurchmesser des Rohrverbindungsstücks aus Kupfer (3);
Einführen des Rohrverbindungsstücks aus Kupfer (3) für etwa 1 cm in das Innere der Aluminiumspule (2);
und
Durchführen eines manuellen Schweißlötschritts mit einem Brenner,
wobei das Verfahren wobei der Schweißlötschritt unter Benutzung eines Stabes aus einer Zink-Aluminium-Legierung mit 98 % Zink, 2 % Aluminium und einer nicht korrodierenden desoxidierenden Paste als Füllmaterial ausgeführt wird.

14. Verfahren nach Anspruch 13, **dadurch gekennzeichnet, dass** das Verfahren folgende Schritte umfasst: Bereitstellen einer Öffnung (11) durch die Aluminiumspule (2), Einführen eines Kapillarrohrs aus Kupfer (10) in die Öffnung, Ausführen eines ersten Schweißlötvorgangs an dem Einlassbereich des Kapillarrohrs aus Kupfer (10), Ausführen einer Zweimantelverjüngung an einem Endabschnitt der Aluminiumspule (2) zum Koppeln des Kapillarrohrs aus Kupfer (10), des Verbindungsstücks aus Kupfer (3) und der Aluminiumspule (2) durch einen einzigen Schweißlötschritt.

15. Verfahren nach Anspruch 13, **dadurch gekennzeichnet, dass** das Verfahren ferner einen Schritt eines Aufbringens einer inneren Ummantelung (12) nahe dem Einlassbereich des Kapillarrohrs aus Kupfer (10) und einer äußeren Beschichtungsummantelung (13) darauf umfasst.

## Revendications

1. Construction d'évaporateur (1), comprenant une bobine en aluminium (2) à laquelle un raccord en cuivre (3) est connecté, ledit raccord en cuivre (3) étant en outre couplé à un tube en cuivre capillaire (5), **caractérisée en ce que** ledit raccord en cuivre (3) a une de ses extrémités disposée sur essentiellement 1 cm dans une partie d'extrémité de ladite bobine en aluminium (2), pour définir une région de connexion entre ladite bobine en aluminium (2) et le raccord en cuivre (3), que ladite construction (1) comprend, à ladite région de connexion, une connexion soudée-brasée (6), que ladite connexion soudée-brasée (6) consiste en un matériau comprenant un alliage de zinc-aluminium comprenant 98 % de zinc, 2 % d'aluminium, ledit matériau comprenant en outre une pâte désoxydante non corrosive.

2. Construction d'évaporateur (1), selon la revendication 1, **caractérisée en ce que** ledit tube en cuivre capillaire (5) est couplé à ladite bobine en aluminium (2) partiellement à l'intérieur ou complètement à l'extérieur de ladite bobine en aluminium (2).

3. Construction d'évaporateur (1), selon les revendications 1 et 2, **caractérisée en ce que** ledit tube en cuivre capillaire (5) est couplé à ladite bobine en aluminium (2) par une connexion soudée à l'étain.

4. Construction d'évaporateur (1), selon une ou plusieurs des revendications précédentes, **caractérisée en ce que** ledit tube en cuivre capillaire (5) est couplé à ladite bobine en aluminium (2) par une gaine thermorétractable (4).

5. Construction d'évaporateur (1), selon une ou plusieurs des revendications précédentes, **caractérisée en ce que** ledit tube en cuivre capillaire (5) est couplé audit raccord en cuivre (3).

6. Construction d'évaporateur (1), selon une ou plusieurs des revendications précédentes, **caractérisée en ce que** ledit tube en cuivre capillaire (5) est engagé dans ladite bobine en aluminium (2) et se projette à partir de celle-ci à la région de connexion connectant le raccord en cuivre (3).

7. Construction d'évaporateur (1), selon une ou plusieurs des revendications précédentes, **caractérisée en ce que** ledit tube en cuivre capillaire (5) s'étend coaxialement à l'intérieur d'une longueur de ladite bobine en aluminium (2).

8. Construction d'évaporateur (1), selon une ou plusieurs des revendications précédentes, **caractérisée en ce que** ladite construction d'évaporateur (1) comprend une première connexion dite soudée-brasée (6) à un point où ledit tube en cuivre capillaire (5) entre dans ladite bobine en aluminium (2).

9. Construction d'évaporateur (1), selon une ou plusieurs des revendications précédentes, **caractérisée en ce que** ladite construction d'évaporateur (1) comprend une gaine interne (12) disposée à une région d'entrée dudit tube en cuivre capillaire, et étant disposée entre ladite bobine en aluminium (2) et le tube en cuivre capillaire, une autre gaine externe (13) pour prévenir la production de courants de Foucault, étant ici également prévue.

10. Construction d'évaporateur (1), selon une ou plusieurs des revendications précédentes, **caractérisée en ce que** ladite construction d'évaporateur (1) comprend en outre, à la région de connexion audit raccord en cuivre (3), une partie d'effilement en double cloches (20) définissant une région de connexion dudit raccord en cuivre (3) et d'une région élargie (21) dudit tube en cuivre capillaire (10), ladite partie d'effilement en double cloches (20) étant constituée par ladite connexion soudée-brasée (6).

11. Construction d'évaporateur (1), selon une ou plusieurs des revendications précédentes, **caractérisée en ce que** ladite construction d'évaporateur (1) comprend en outre une gaine ou une chemise d'extrémité (30) pour protéger la connexion.

12. Construction d'évaporateur (1), selon une ou plusieurs des revendications précédentes, **caractérisée en ce que** ladite gaine d'extrémité (30) est d'un type thermorétractable.

13. Procédé de fabrication d'une construction d'évaporateur selon les revendications 1 à 12, **caractérisé en ce que** ledit procédé comprend les étapes de :
nettoyage et dégraissage d'un raccord de tube en cuivre (3) et d'une bobine d'aluminium (2) à leurs points de jonction ;
réalisation d'un effilement ou d'un carrossage d'une partie d'extrémité de la bobine en aluminium (2) pour fournir un diamètre interne légèrement supérieur à un diamètre externe du raccord de tube en cuivre (3) ;
introduction dudit raccord de tube en cuivre (3) sur environ 1 cm à l'intérieur de ladite bobine en aluminium (2) ;
et
réalisation d'une étape de soudage-brasage manuelle à la torche, ledit procédé étant où ladite étape de soudage-brasage est réalisée en utilisant, comme matériau de remplissage, une tige en alliage de zinc-aluminium, comprenant 98 % de zinc, 2 % d'aluminium et une pâte désoxydante non corrosive.

14. Procédé, selon la revendication 13, **caractérisé en ce que** ledit procédé comprend les étapes de fourniture d'un trou (11) à travers ladite bobine en aluminium (2), l'introduction d'un tube en cuivre capillaire (10) dans ledit trou, réalisant une première opération de soudage-brasage à la région d'entrée dudit tube en cuivre capillaire (10), réalisant un effilement en double cloches à une partie d'extrémité de ladite bobine en aluminium (2) pour coupler ledit tube en cuivre capillaire (10), le raccord en cuivre (3) et la bobine en aluminium (2) par une simple étape de soudage-brasage.

15. Procédé, selon la revendication 13, **caractérisé en ce que** ledit procédé comprend en outre une étape d'application d'une gaine interne (12) près de la région d'entrée dudit tube en cuivre capillaire (10) et d'une gaine de revêtement externe (13) dessus.
